(19) Europäisches Patentamt / European Patent Office / Office européen des brevets

(11) **EP 1 816 903 B1**

(12) **EUROPÄISCHE PATENTSCHRIFT**

(45) Veröffentlichungstag und Bekanntmachung des Hinweises auf die Patenterteilung:
**28.08.2013   Patentblatt 2013/35**

(51) Int Cl.:
*H05B 39/04* (2006.01)

(21) Anmeldenummer: **06126176.4**

(22) Anmeldetag: **14.12.2006**

(54) **Dimmerschaltung mit Nulldurchgangskorrektur**

Dimmer circuit with zero point correction

Commutateur variable d'une correction du point zéro

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **06.02.2006   DE 102006005289**

(43) Veröffentlichungstag der Anmeldung:
**08.08.2007   Patentblatt 2007/32**

(73) Patentinhaber: **Siemens Aktiengesellschaft 80333 München (DE)**

(72) Erfinder:
• **Stieglbauer, Walter**
  **93107, Thalmassing (DE)**
• **Schönberger, Thomas**
  **94315, Straubing (DE)**

(56) Entgegenhaltungen:
**EP-A- 1 135 007       DE-A1- 3 614 433
US-B1- 6 380 692**

EP 1 816 903 B1

**Beschreibung**

Die Erfindung betrifft eine Dimmerschaltung zur Steuerung der Speisung einer Last, wobei die Dimmerschaltung einen gesteuerten Wechselstromschalter umfasst, der in Reihe zur Last in eine elektrische Versorgungsleitung geschaltet ist.

Eine Dimmerschaltung basiert üblicherweise auf der bekannten Phasenanschnitt- oder Phasenabschnittsteuerung, wobei die Nulldurchgänge der Versorgungsspannung des öffentlichen Versorgungsnetzes als Referenzpunkte für die Steuerung verwendet werden. Aufgrund der Versorgungsspannung überlagerter Rundsteuersignale ergeben sich Verschiebungen der Nulldurchgänge, sodass beispielsweise eine als Last angeschlossene Lampe flackert.

Um dies zu vermeiden, enthält eine in der EP 1 135 007 B1 beschriebene Dimmerschaltung eine Nulldurchgangskorrektur, bei der anstelle der tatsächlichen Nulldurchgänge mittels einer Korrekturfunktion errechnete virtuelle Nulldurchgänge für die Phasenanschnittsteuerung verwendet werden. Allerdings führt diese Korrekturfunktion bei Störungen der Versorgungsspannung, die eine langsame Verschiebung der Nulldurchgänge bewirken, beispielsweise bei Netzfrequenzschwankungen, zu unerwünschten Helligkeitsänderungen der betriebenen Lampe.

Aus der DE 44 06 371 B4 ist ein anderes Verfahren zur Helligkeitssteuerung einer Lampe bekannt, bei dem eine der ab jedem Nulldurchgang der Netzspannung der Lampe zugeführte Energiemenge mittels eines Integrierers bestimmt wird, und die Energiezufuhr bei Erreichen einer vorgebbaren Energiemenge bis zum nächsten Nulldurchgang unterbrochen wird. Dieses Verfahren ist aufwändig in der Umsetzung. Es benötigt etliche gesonderte Hardware-Komponenten.

Als Stand der Technik werden in der DE 44 06 371 B4 und auch in der DE 698 12 133 T2 weitere Dimmerschaltungen beschrieben, bei denen virtuelle Nulldurchgänge der Versorgungsspannung mittels eines trägen Phasenregelkreises (PLL) bestimmt und für die Phasenanschnittsteuerung verwendet werden. Auch diese Varianten führen bei Netzfrequenzschwankungen zu unerwünschten Helligkeitsänderungen.

Ein ähnliches Verfahren und eine ähnliche Einrichtung zur digitalen Helligkeitssteuerung werden in der DE 36 14 433 A1 beschrieben. Es kommt ebenfalls eine PLL-Schaltung zum Einsatz, die einen spannungsgesteuerten Oszillator umfasst, dessen Ausgangssignal nach einer Frequenzteilung unmittelbar als Nulldurchgangssignal zur Dimmersteuerung herangezogen wird.

Aus der WO 03/081364 A1 ist eine Dimmerschaltung bekannt, bei der die Korrektur des Einflusses der Rundsteuersignale über ein aktives Filter erfolgt. Letzteres erfordert einen erheblichen Hardware-Realisierungsaufwand.

Gleiches gilt auch für die in der US 6 380 692 B1 beschriebene Dimmerschaltung. Bei dieser Schaltung kommt ein relativ aufwendiges aktives Tiefpass-Filter zum Einsatz, um ein korrigiertes Spannungssignal zu erzeugen, anhand dessen die Nulldurchgangserkennung vorgenommen wird.

Die Aufgabe der Erfindung besteht deshalb darin, eine Dimmerschaltung der eingangs bezeichneten Art anzugeben, die den Einfluss sowohl der Rundsteuersignale als auch der Netzfrequenzschwankungen mit vergleichsweise geringem Aufwand kompensiert.

Diese Aufgabe wird gelöst durch die Merkmale des unabhängigen Patentanspruchs 1. Die erfindungsgemäße Dimmerschaltung umfasst eine Nulldurchgangs-Erfassungseinheit zur Erfassung von Zeitpunkten von tatsächlichen Nulldurchgängen eines in der Versorgungsleitung geführten Versorgungssignals und eine zur Steuerung des Wechselstromschalters vorgesehene Nulldurchgangs-Korrektureinheit, die einen ersten Regelkreis zur Nachbildung eines ungestörten Versorgungssignals, eine in den ersten Regelkreis eingebundene Vergleichseinheit zum Vergleich virtueller Nulldurchgänge des nachgebildeten ungestörten Versorgungssignals mit erfassten tatsächlichen Nulldurchgängen und zur Ausgabe eines ersten Vergleichssignals, und an die Vergleichseinheit angeschlossene Auswerte- und Schaltmittel, die das erste Vergleichssignal hinsichtlich einer zu korrigierenden Nulldurchgangsverschiebung im Versorgungssignal auswerten und je nach Ergebnis der Auswertung als Korrektursignal auf einen Ausgang der Nulldurchgangs-Korrektureinheit schalten, umfasst.

Die Nulldurchgangs-Korrektureinheit der erfindungsgemäßen Dimmerschaltung ist in der Lage, zwischen schneller veränderlichen Nulldurchgangsverschiebungen, die insbesondere durch Rundsteuersignale hervorgerufen werden, und solchen, die langsamer veränderlich sind und insbesondere durch Netzfrequenzschwankungen hervorgerufen werden, zu unterscheiden. Die Auswerte- und Schaltmittel sorgen dafür, dass das erste Vergleichssignal nur bei einem erkannten Rundsteuersignal der ansonsten in bekannter Weise ausgeführten Steuerung des Wechselstromschalters zugeführt wird, um die erfassten tatsächlichen Nulldurchgänge zu korrigieren. Bei Netzfrequenzschwankungen erfolgt dagegen keine Nulldurchgangskorrektur mittels des ersten Vergleichssignals. Somit treten an einer als Last angeschlossenen Lampe weder bei Rundsteuersignalen noch bei Netzfrequenzschwankungen Helligkeitsänderungen auf.

Der Realisierungsaufwand für die erfindungsgemäße Dimmerschaltung hält sich in Grenzen. So handelt es sich bei dem beispielsweise als PLL-Kreis ausgeführten Regelkreis, bei der beispielsweise als vergleichender Phasendetektor ausgeführten Vergleichseinheit und auch bei den Auswerte- und Schaltmitteln um einfache Komponenten, die ohne weiteres sowohl in Hardware- als auch in Softwaretechnik realisiert werden können.

Vorteilhafte Ausgestaltungen der erfindungsgemäßen Dimmerschaltung ergeben sich aus den Merkmalen der von Anspruch 1 abhängigen Ansprüche.

Günstig ist eine Variante, bei der die Auswerte- und Schaltmittel zur Ermittlung einer zu korrigierenden Nulldurchgangsverschiebung anhand eines Zeitabstands zwischen zwei aufeinander folgenden Extremwerten, also beispielsweise zwischen einem Minimum und einem darauf folgenden Maximum, des ersten Vergleichssignals ausgelegt sind. Vorzugsweise ist für den Zeitabstand ein oberer Grenzwert im Bereich zwischen 0,5 s und 4 s, insbesondere von 2 s, vorgesehen. Auch die insbesondere sinusförmigen Rundsteuersignale rufen ein ebenfalls periodisches erstes Vergleichssignal mit einer vergleichsweise kurzen Periodendauer hervor. Der Zeitabstand zwischen zwei Extremwerten kann deshalb sehr gut als leicht zu bestimmendes (Teil)Kriterium für das Vorliegen eines Rundsteuersignals verwendet werden.

Weiterhin können die Auswerte- und Schaltmittel zur Ermittlung einer zu korrigierenden Nulldurchgangsverschiebung anhand einer Amplitudendifferenz der Extremwerte ausgelegt sein. Vorzugsweise ist für die Amplitudendifferenz ein unterer Grenzwert im Bereich zwischen 10 µs und 50 µs, insbesondere von 30 µs, vorgesehen. Die Amplituden der Extremwerte des ersten Vergleichssignals und damit auch die Amplitudendifferenz erlauben problemlos einen Rückschluss auf die Amplitude des ursächlichen Rundsteuersignals. So korrespondieren die vorstehend genannten Zeitwerte mit Amplitudendifferenzen des Rundsteuersignals zwischen 2 Volt und 7 Volt. Somit kann die Amplitudendifferenz der Extremwerte als weiteres und ebenfalls leicht zu bestimmendes (Teil)Kriterium für das Vorliegen eines Rundsteuersignals verwendet werden. Insbesondere lässt sich anhand der Amplitudendifferenz der Extremwerte in Verbindung mit dem zugehörigen Zeitabstand zwischen den zwei Extremwerten eine Steigung des ersten Vergleichssignals ermitteln. Ob eine zu korrigierende und insbesondere auf ein Rundsteuersignal zurückzuführende Nulldurchgangsverschiebung vorliegt, kann dann davon abhängig gemacht werden, ob die so ermittelte Steigung einen gewissen Mindestwert übersteigt.

Gemäß einer anderen günstigen Variante ist die Vergleichseinheit zur Erzeugung und Ausgabe eines zweiten Vergleichssignals, das die erste zeitliche Ableitung des ersten Vergleichssignals ist, ausgelegt, und die Auswerte- und Schaltmittel sind zur Auswertung hinsichtlich einer zu korrigierenden Nulldurchgangsverschiebung anhand des ersten und des zweiten Vergleichssignals ausgelegt. Das optionale zweite Vergleichssignal erleichtert anhand einer einfachen Nullpunktbestimmung die Ermittlung der Extremwerte des ersten Vergleichssignals.

Vorzugsweise ist die Nulldurchgangs-Korrektureinheit im Wesentlichen als Software-Komponente realisiert. Dadurch ist der Realisierungsaufwand besonders niedrig.

Gleiches gilt für die weitere bevorzugte Ausgestaltung, gemäß der der Wechselstromschalter und die Nulldurchgangs-Korrektureinheit als gemeinsame Baugruppe ausgeführt sind. Insbesondere kann die Nulldurchgangs-Korrektureinheit dann als ein auf dem ohnehin vorhandenen Controller (oder µ-Prozessor) des Wechselstromschalters ablaufendes Software-Modul ausgeführt sein.

Günstig ist weiterhin eine Variante, bei der die Nulldurchgangs-Korrektureinheit einen zweiten Regelkreis zur Nachbildung eines in der Versorgungsleitung geführten Versorgungssignals umfasst, der eine kürzere Zeitkonstante, also insbesondere auch eine schnellere Nachführung, hat als der erste Regelkreis. Der zweite Regelkreis erlaubt dann auch für den Fall einer langsameren Nulldurchgangsverschiebung (Netzfrequenzstörung) eine Signalrekonstruktion.

Weiterhin sind die Auswerte- und Schaltmittel vorzugsweise zur wahlweisen Beschaltung des Ausgangs mit dem ersten Vergleichssignal oder mit einem im zweiten Regelkreis ermittelten dritten Vergleichssignal ausgelegt. Damit steht sowohl bei den schneller veränderlichen Nulldurchgangsverschiebungen (Rundsteuersignale) als auch bei den langsameren Nulldurchgangsverschiebungen (Netzfrequenzstörung) ein Korrektursignal zur Verfügung.

Weitere Merkmale, Vorteile und Einzelheiten der Erfindung ergeben sich aus der nachfolgenden Beschreibung von Ausführungsbeispielen anhand der Zeichnung. Es zeigt:

FIG 1    ein Ausführungsbeispiel einer Dimmerschaltung mit einer zuschaltbaren Nulldurchgangs-Korrektureinheit,

FIG 2    ein Diagramm mit Zeitverläufen einer ungestörten und einer mit einem Rundsteuersignal überlagerten Versorgungsspannung,

FIG 3    ein Diagramm mit Nullgangsverschiebungen verursacht durch ein Rundsteuersignal, und

FIG 4    ein Diagramm mit Zeitverläufen von in der Dimmerschaltung gemäß FIG 1 erzeugten Phasen-Vergleichssignalen bei Vorliegen eines Rundsteuersignals und einer Netzfrequenzschwankung.

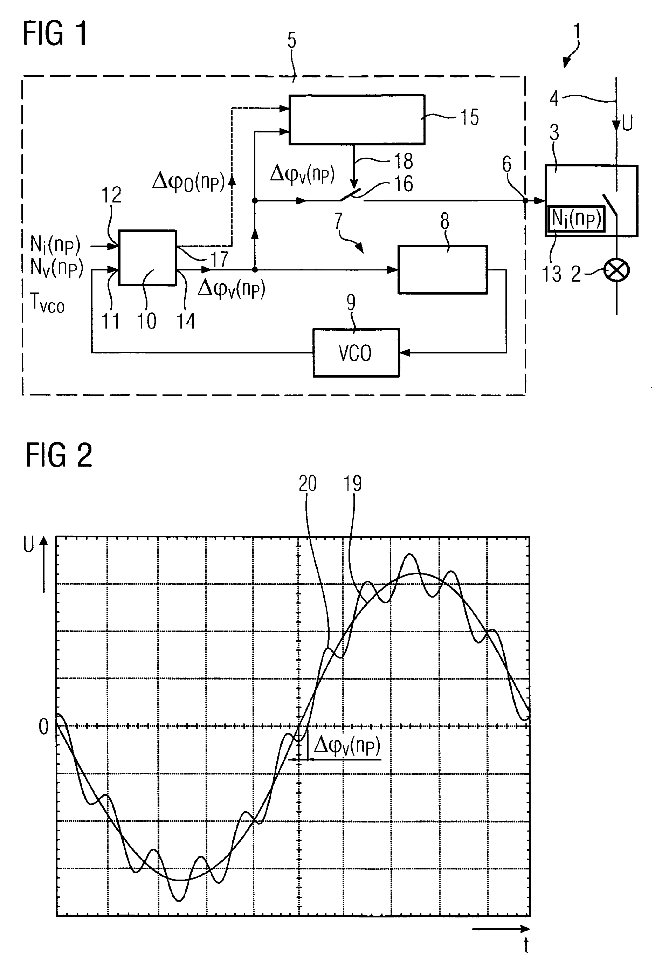

In FIG 1 ist ein Ausführungsbeispiel einer Dimmerschaltung 1 zur Steuerung der Speisung einer Last, genauer gesagt zur Helligkeitssteuerung eines am öffentlichen 50/60 Hz-Versorgungsnetz betriebenen Leuchtmittels in Form einer Lampe 2, gezeigt. Die Dimmerschaltung 1 enthält einen an sich bekannten gesteuerten elektronischen Wechselstromschalter 3, der in Reihe zur Lampe 2 in eine elektrische Versorgungsleitung 4 geschaltet ist.

Die Dimmerschaltung 1 umfasst außerdem eine Nulldurchgangs-Korrektureinheit 5, die insbesondere auch integraler Bestandteil des Wechselstromschalters 3 sein kann. Sie ist im Ausführungsbeispiel als Software-Modul realisiert, das auf einer nicht näher gezeigten Controller-Baugruppe, beispielsweise der des Wechselstromschalters 3, abläuft. Die Nulldurchgangs-Korrektureinheit 5 hat einen Ausgang 6, mit dem sie an die ebenfalls nicht näher gezeigte Steuerschaltung des Wechselstromschalters 3 angeschlossen ist.

Die Nulldurchgangs-Korrektureinheit 5 enthält einen PLL-Regelkreis 7 mit einem Schleifenfilter 8, mit einem spannungsgesteuerten Oszillator (VCO) 9 und mit einem vergleichenden Phasendetektor 10. Letzterer hat einen ersten Phasendetektor-Eingang 11 zur Einbindung in den PLL-Regelkreis 7 und einen zweiten Phasendetektor-Eingang 12, der über eine nicht näher gezeigte Verbindung an eine Nulldurchgangs-Erfassungseinheit 13 angeschlossen ist. Die Nulldurchgangs-Erfassungseinheit 13 kann, wie im Ausführungsbeispiel gezeigt, Bestandteil des Wechselstromschalters 3 sein. Andere Ausführungen sind aber auch möglich.

Der Phasendetektor 10 hat außerdem mindestens einen ersten Phasendetektor-Ausgang 14, der an das, unerwünschte Wechselsignalanteile aus dem PLL-Regelkreis 7 herausfilternde, Schleifenfilter 8 und darüber hinaus an eine Auswerteeinheit 15 sowie über einen Schalter 16 an den Ausgang 6 angeschlossen ist. Ein zweiter Phasendetektor-Ausgang 17 ist optional vorgesehen. Er ist mittels der in FIG 1 gestrichelt dargestellten optionalen Verbindung an die Auswerteeinheit 15 angeschlossen. Zwischen der Auswerteeinheit 15 und dem Schalter 16 ist eine Steuerverbindung 18 vorgesehen.

Im Folgenden wird auch unter Bezugnahme auf die Diagramme gemäß FIG 2 bis 4 die Wirkungsweise der Dimmerschaltung 1 beschrieben.

Die Dimmerschaltung 1 kompensiert Nulldurchgangs-Verschiebungen $\Delta\varphi_V(n_P)$, die eine in der Versorgungsleitung 4 geführte Versorgungsspannung U aufgrund einer Überlagerung von sinusförmigen Rundsteuersignalen aufweist. Die so korrigierten Nulldurchgangszeitpunkte werden anstelle der mittels der Nulldurchgangs-Erfassungseinheit 13 bestimmten Zeitpunkte der tatsächlichen Nulldurchgänge $N_1(n_P)$ für die Steuerung des Wechselstromstellers 3 verwendet, wobei $n_P$ ein Zählwert für die Netzperioden der Versorgungsspannung U ist. Die Netzperiode entspricht dem Kehrwert der Netzgrundfrequenz $f_0$, die je nach Versorgungsnetz einen Wert von 50 Hz oder 60 Hz hat.

In FIG 2 sind über der Zeit t Verläufe einer ungestörten und einer mit einem Rundsteuersignal überlagerten Versorgungsspannung U dargestellt. Die Kurve für die ungestörte Versorgungsspannung U ist mit 19, diejenige mit der Rundsteuerüberlagerung mit 20 bezeichnet. Eingetragen ist auch die resultierende Nulldurchgangs-Verschiebung $\Delta\varphi_V(n_P)$.

Aufgrund der Nulldurchgangskorrektur wird ein unerwünschtes Flackern der Lampe 2 verhindert. Die Kompensation greift nur ein, wenn in der Auswerteeinheit 15 festgestellt wird, dass der Versorgungsspannung U ein vergleichsweise schnell veränderliches Rundsteuersignal überlagert ist. Keine Kompensation erfolgt dagegen bei einer demgegenüber deutlich langsameren Netzfrequenzschwankung. Beim Ausführungsbeispiel von FIG 1 bleibt dann der Schalter 16 geöffnet und damit die Nulldurchgangskorrektur ausgeschaltet.

In dem trägen PLL-Regelkreis 7 wird im Wesentlichen eine ungestörte, also eine virtuelle Versorgungsspannung $U_V$ nachgebildet, anhand derer Zeitpunkte virtueller Nulldurchgänge $N_V(n_P)$ ermittelt werden. Der PLL-Regelkreis 7 hat eine so große Zeitkonstante, dass die Nachführung den schnellen Änderungen, die durch die überlagerten Rundsteuersignale hervorgerufen werden, nicht folgt. Eine VCO-Periodendauer $T_{VCO}$ des spannungsgesteuerten Oszillators 9 bleibt praktisch unverändert oder verändert sich nur vernachlässigbar langsam.

Im Phasendetektor 10 wird ein Vergleich zwischen den Zeitpunkten der tatsächlichen Nulldurchgänge $N_i(n_P)$ und denen der virtuellen Nulldurchgänge $N_V(n_P)$ durchgeführt. Auf Basis dieses Vergleichs werden ein erstes und ggf. auch ein zweites Phasen-Vergleichssignal $\Delta\varphi_V(n_P)$ bzw. $\Delta\varphi_0(n_P)$ abgeleitet und am ersten bzw. zweiten Phasendetektor-Ausgang 14 bzw. 17 den nachfolgenden Einheiten zur weiteren Verwendung zur Verfügung gestellt.

Das zweite Phasen-Vergleichssignal $\Delta\varphi_0(n_P)$ ist gleich der ersten zeitlichen Ableitung des ersten Phasen-Vergleichssignals $\Delta\varphi_V(n_P)$. Es gilt also der Zusammenhang:

$$\Delta\varphi_v(n_P) \;=\; \int \Delta\varphi_0(n_P) \tag{1}$$

Bezogen auf das diskrete Zeitraster der Zählwerte $n_P$ der Netzperioden kann das zweite Phasen-Vergleichssignal $\Delta\varphi_0(nP)$ gemäß folgender Rekursionsformel errechnet werden:

$$\Delta\varphi_0(n_P) \;=\; N_i(n_P) \;-\; (N_1(n_P - 1) + T_{VCO}) \tag{2}$$

Wenn die Versorgungsspannung U mit einem Rundsteuersignal, das ebenfalls eine periodische Wechselgröße ist, überlagert ist, kann das zweite Phasen-Vergleichssignal $\Delta\varphi_0(n_P)$ positive und negative Werte annehmen.

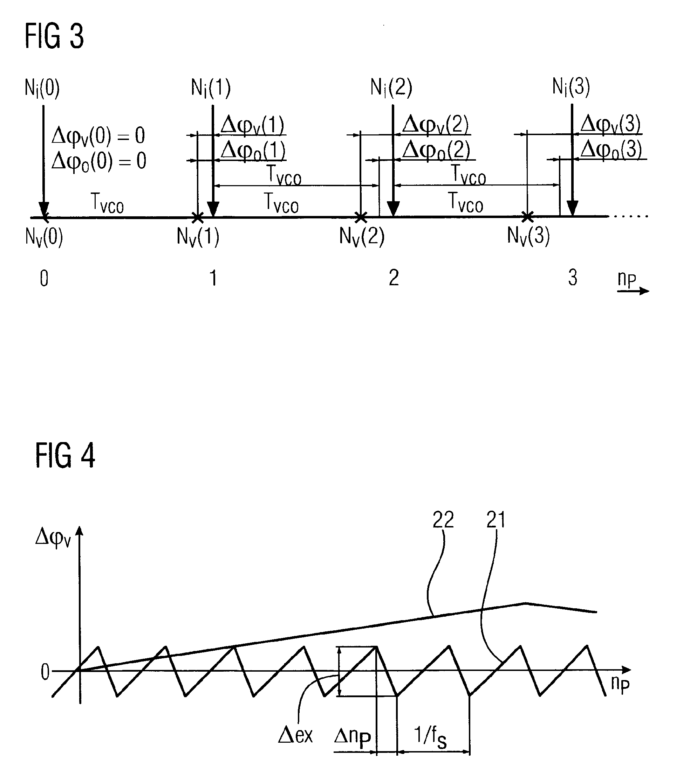

In dem Diagramm gemäß FIG 3 sind beispielhaft die Zusammenhänge zwischen den Zeitpunkten der tatsächlichen Nulldurchgänge $N_I(n_P)$ und denen der virtuellen Nulldurchgänge $N_V(n_P)$ dargestellt. Zu entnehmen ist außerdem auch deren sukzessive Bestimmung aus den jeweils zugehörigen Nulldurchgängen der vorhergehenden Netzperiode $(n_P - 1)$, den beiden Phasen-Vergleichssignalen $\Delta\varphi_V(n_P)$ und $\Delta\varphi_V(n_P)$ sowie der VCO-Periodendauer $T_{VCO}$.

Ausgangspunkt ist der Zeitpunkt $n_P = 0$, zu dem sich der PLL-Regelkreis 7 im vollständig synchronisierten Zustand befindet. Der tatsächliche Nulldurchgang $N_i(n_P{=}0)$ und der virtuelle Nulldurchgang $N_v(n_P = 0)$ fallen zeitlich zusammen. Ab dem Zeitpunkt $n_P = 1$ ist der Versorgungsspannung U ein Rundsteuersignal überlagert, sodass sich in der Folge die Zeitpunkte der tatsächlichen Nulldurchgänge $N_I (n_P \geq 1)$ gegenüber denen der zugehörigen virtuellen Nulldurchgänge $N_v(n_P \geq 1)$ verschieben.

Der Zeitpunkt des virtuellen Nulldurchgangs $N_v(n_P)$ der aktuellen Netzperiode $n_P$ errechnet sich aus demjenigen der vorhergehenden Netzperiode $(n_P - 1)$ gemäß:

$$N_v(n_P) \;=\; N_v(n_P - 1) + T_{VCO} \tag{3}$$

Das im Phasendetektor 10 bestimmte erste Phasen-Vergleichssignal $\Delta\varphi_V(n_P)$ ergibt sich aus der Differenz der Zeitpunkte des tatsächlichen und des virtuellen Nulldurchgangs $N_i(n_P)$ bzw. $N_v(n_P)$:

$$\Delta\varphi_V(n_P) \;=\; N_i(n_P) - N_v(n_P) \tag{4}$$

Wenn der Versorgungsspannung U ein Rundsteuersignal überlagert ist, weist auch das resultierende erste Phasen-Vergleichssignal $\Delta\varphi_V(n_P)$ eine Periodizität und zwar mit dem Kehrwert einer Schwebungsfrequenz $f_s$ auf. Die Schwebungsfrequenz $f_s$ ergibt sich aus der Differenz der Rundsteuerfrequenz und dem nächst gelegenen Vielfachen der Netzgrundfrequenz $f_0$. Die Werte der Schwebungsfrequenz $f_s$ liegen zwischen 0 Hz und 25 Hz.

In FIG 4 ist ein mit 21 bezeichneter Zeitverlauf eines solchen periodischen ersten Phasen-Vergleichssignals $\Delta\varphi_V(n_P)$ gezeigt. Daneben ist ein weiterer mit 22 bezeichneter Zeitverlauf des ersten Phasen-Vergleichssignals $\Delta\varphi_V(n_P)$ eingetragen, der sich bei einer Netzfrequenzschwankung ergibt. Bei einer Rundsteuersignalüberlagerung ist eine Steigung $\Delta\varphi_V(n_P)/\Delta n_P$ zwischen zwei aufeinander folgenden Extremwerten des ersten Phasen-Vergleichssignals $\Delta\varphi_V(n_P)$ deutlich größer als bei einer Netzfrequenzschwankung, wobei $\Delta n_P$ den Zeitabstand zwischen den zwei aufeinander folgenden Extremwerten bezeichnet.

In der Auswerteeinheit 15 wird deshalb als Kriterium für das Vorliegen einer Rundsteuersignalüberlagerung geprüft, ob der Zeitabstand $\Delta n_P$ einen oberen Zeitgrenzwert von 2s nicht überschreitet. Ist der Zeitabstand $\Delta n_P$ zwischen einem Minimum und einem folgenden Maximum oder einem Maximum und einem folgenden Minimum kleiner, wird in einem zweiten Schritt außerdem geprüft, ob die Amplitudendifferenz $\Delta ex$ der zwei Extremwerte, die einander im Zeitabstand $\Delta n_P$ folgen, einen unteren Amplitudengrenzwert von 30 $\mu s$ (entsprechend einer Rundsteuersignalamplitude von etwa 3 Volt) nicht unterschreitet. Die Amplitude des Rundsteuersignals geht auch in die Amplitudenwerte der Maxima und Minima des ersten Phasen-Vergleichssignals $\Delta\varphi_V(n_P)$ ein.

Die Ansprechschwellen gemäß des Zeit- und des Amplitudengrenzwerts lassen sich je nach Bedarf auch an verschiedene Schwebungsfrequenzen $f_s$ anpassen. Dies kann automatisiert in der Auswerteeinheit 15 anhand einer Ermittlung der aktuellen Schwebungsfrequenz $f_s$ und einer hinterlegten Zuordnungsvorschrift oder -tabelle erfolgen.

Nur wenn die beiden Bedingungen für den Zeit- und für den Amplitudengrenzwert erfüllt sind, gibt die Auswerteeinheit 15 über die Steuerverbindung 18 einen Schaltbefehl an den Schalter 16, sodass dieser geschlossen wird und das erste Phasen-Vergleichssignal $\Delta\varphi_V(n_P)$ als Korrektursignal am Ausgang 6 zur weiteren Berücksichtigung in der Steuerung des Wechselstromschalters 3 ansteht.

Das der Auswerteeinheit 15 optional zugeführte zweite Phasen-Vergleichssignal $\Delta\varphi_V(n_P)$ erleichtert das Auffinden der Extremwerte des ersten Phasen-Vergleichssignals $\Delta\varphi_V(n_P)$. Eine Nullstelle im zweiten Phasen-Vergleichssignals $\Delta\varphi_0(n_P)$ signalisiert einen der gesuchten Extremwerte.

Bei einem nicht gezeigten alternativen Ausführungsbeispiel hat die Nulldurchgangs-Korrektureinheit 5 einen zweiten PLL-Regelkreis, der ebenfalls die in der Versorgungsleitung 4 geführte Versorgungsspannung U nachbildet, aber eine kürzere Zeitkonstante und damit eine schnellere Nachführung als der PLL-Regelkreis 7 aufweist. Der zweite PLL-Regelkreis erzeugt ein drittes Phasen-Vergleichssignal, das insbesondere dann auf den Ausgang 6 geschaltet wird, wenn die Auswertung in der Auswerteeinheit 15 zu dem Resultat kommt, dass keine zu korrigierende Rundsteuerüberlagerung vorliegt, und der im Ausführungsbeispiel von FIG 1 gezeigte Schalter 6 geöffnet bliebe. Dieser Schalter 6 ist bei dem nicht gezeigten alternativen Ausführungsbeispiel durch einen Umschalter zwischen den beiden PLL-Regelkreisen ersetzt. Bei diesem alternativen Ausführungsbeispiel steht der Steuerung des Wechselstromschalters 3 also stets ein Signal zur Nulldurchgangskorrektur zur Verfügung, insbesondere auch für den Fall anderer Netzstörungen.

Die im Ausführungsbeispiel gemäß FIG 1 gezeigte einphasige Einbindung in das öffentliche Spannungsversorgungsnetz ist nicht einschränkend zu verstehen. Andere Ausführungsformen, beispielsweise eine dreiphasige Variante, lassen sich in analoger Weise realisieren. Ebenso kann anstelle der in FIG 1 gezeigten Lampe 2 eine andere Last vorgesehen sein. Die vorteilhafte aufwandsarme Kompensation des Einflusses sowohl der Rundsteuersignale als auch der Netzfrequenzschwankungen ist auch bei den alternativen Ausführungsformen gegeben.

**Patentansprüche**

1. Dimmerschaltung zur Steuerung der Speisung einer Last (2) umfassend

   a) einen gesteuerten Wechselstromschalter (3), der in Reihe zur Last (2) in eine elektrische Versorgungsleitung (4) geschaltet ist,
   b) eine auf eine Steuerung des Wechselstromschalters (3) einwirkende Nulldurchgangs-Korrektureinheit (5), **dadurch gekennzeichnet, dass**
   c) eine Nulldurchgangs-Erfassungseinheit (13) zur Erfassung von Zeitpunkten von tatsächlichen Nulldurchgängen ($N_i(n_P)$) eines in der Versorgungsleitung (4) geführten Versorgungssignals (U) vorgesehen ist, wobei
   d) die Nulldurchgangs-Korrektureinheit (5)

   d1) einen ersten Regelkreis (7) zur Nachbildung eines ungestörten Versorgungssignals (U),
   d2) eine in den ersten Regelkreis (7) eingebundene Vergleichseinheit (10) zum Vergleich virtueller Nulldurchgänge ($N_v(n_P)$) des nachgebildeten ungestörten Versorgungssignals (U) mit den erfassten tatsächlichen Nulldurchgängen ($N_i(n_P)$) und zur Ausgabe eines ersten Vergleichssignals $\Delta\varphi_V(n_P)$, und
   d3) an die Vergleichseinheit (10) angeschlossene Auswerte- und Schaltmittel (15, 16), die das erste Vergleichssignal ($\Delta\varphi_V(n_P)$) hinsichtlich einer zu korrigierenden Nulldurchgangsverschiebung im Versorgungssignal (U) auswerten und je nach Ergebnis der Auswertung als Korrektursignal auf einen Ausgang (6) der Nulldurchgangs-Korrektureinheit (5) schalten,

   umfasst.

2. Dimmerschaltung nach Anspruch 1, **dadurch gekenn- zeichnet**, dass die Auswerte- und Schaltmittel (15, 16) ausgelegt sind zur Ermittlung einer zu korrigierenden Nulldurchgangsverschiebung anhand eines Zeitabstands ($\Delta n_P$) zwischen zwei aufeinander folgenden Extremwerten des ersten Vergleichssignals $\Delta\varphi_V(n_P)$).

3. Dimmerschaltung nach Anspruch 2, **dadurch gekennzeichnet, dass** für den Zeitabstand ($\Delta n_P$) ein oberer Grenzwert im Bereich zwischen 0,5 s und 4 s, insbesondere von 2 s, vorgesehen ist.

4. Dimmerschaltung nach Anspruch 2, **dadurch gekennzeichnet, dass** die Auswerte- und Schaltmittel (15, 16) ausgelegt sind zur Ermittlung einer zu korrigierenden Nulldurchgangsverschiebung anhand einer Amplitudendifferenz ($\Delta ex$) der Extremwerte.

5. Dimmerschaltung nach Anspruch 4, **dadurch gekennzeichnet, dass** für die Amplitudendifferenz ($\Delta ex$) ein unterer Grenzwert im Bereich zwischen 10 $\mu$s und 50 $\mu$s, insbesondere von 30 $\mu$s, vorgesehen ist.

6. Dimmerschaltung nach Anspruch 1, **dadurch gekennzeichnet, dass** die Vergleichseinheit (10) ausgelegt ist zur Erzeugung und Ausgabe eines zweiten Vergleichssignals ($\Delta\varphi_0(n_P)$), das die erste zeitliche Ableitung des ersten Vergleichssignals ($\Delta\varphi_V(n_P)$) ist, und die Auswerte- und Schaltmittel (15, 16) ausgelegt sind zur Auswertung hinsichtlich einer zu korrigierenden Nulldurchgangsverschiebung anhand des ersten und des zweiten Vergleichssignals ($\Delta\varphi_V(n_P)$, $\Delta\varphi_0(n_P)$).

7. Dimmerschaltung nach Anspruch 1, **dadurch gekennzeichnet, dass** die Nulldurchgangs-Korrektureinheit (5) im Wesentlichen als Software-Komponente realisiert ist.

8. Dimmerschaltung nach Anspruch 1, **dadurch gekennzeichnet, dass** der Wechselstromschalter (3) und die Nulldurchgangs-Korrektureinheit (5) als gemeinsame Baugruppe ausgeführt sind.

9. Dimmerschaltung nach Anspruch 1, **dadurch gekennzeichnet, dass** die Nulldurchgangs-Korrektureinheit (5) einen zweiten Regelkreis zur Nachbildung eines in der Versorgungsleitung (4) geführten Versorgungssignals (U) umfasst, der eine kürzere Zeitkonstante hat als der erste Regelkreis (7).

**10.** Dimmerschaltung nach Anspruch 9, **dadurch gekennzeichnet, dass** die Auswerte- und Schaltmittel (15, 16) ausgelegt sind zur wahlweisen Beschaltung des Ausgangs (6) mit dem ersten Vergleichssignal ($\Delta\varphi_V(n_P)$) oder mit einem im zweiten Regelkreis ermittelten dritten Vergleichssignal.

**Claims**

**1.** Dimmer circuit for controlling the supply of a load (2) comprising

a) a controlled AC switch (3) which is connected in series to the load (2) in an electrical supply line (4),
b) a zero-point correction unit (5) acting on a controller of the AC switch (3),
**characterised in that**
c) a zero-point detection unit (13) for detecting actual zero point times ($N_i(n_p)$) of a supply signal (U) carried in the supply line (4), wherein
d) the zero-point correction unit (5) comprises

dl) a first regulation circuit (7) for emulating an undisturbed supply signal (U),
d2) a comparison unit (10) linked into the first regulation circuit (7) for comparing virtual zero points ($N_v(n_p)$) of the emulated undisturbed supply signal (U) with the detected actual zero points ($N_i(n_p)$) and for output of a first comparison signal $\Delta\varphi_V (n_p)$), and
d3) evaluation and switching means (15, 16) connected to the comparison unit (10), which evaluate the first comparison signal $\Delta\varphi_V(n_p)$, in respect of a zero-point shift in the supply signal (U) to be corrected and, depending on the result of the evaluation, connect it as a correction signal to an output (6) of the zero-point correction unit (5).

**2.** Dimmer switch according to claim 1, **characterised in that** the evaluation and switching means (15, 16) are designed to determine a zero-point shift to be corrected on the basis of a time gap ($\Delta n_p$) between two consecutive extreme values of the first comparison signal ($\Delta\varphi_V(n_p)$).

**3.** Dimmer switch according to claim 2, **characterized in that** an upper limit ranging between 0.5 s and 4 s, especially of 2 s, is provided for the time gap ($\Delta np$).

**4.** Dimmer switch according to claim 2, **characterised in that** the evaluation and switching means (15, 16) are designed to determine a zero-point shift to be corrected on the basis of an amplitude difference ($\Delta ex$) of the extreme values.

**5.** Dimmer switch according to claim 4, **characterised in that** a lower limit ranging between 10 $\mu$s and 50 $\mu$s, especially of 30 $\mu$s, is provided for the amplitude difference ($\Delta ex$).

**6.** Dimmer switch according to claim 1, **characterised in that** the comparison unit (10) is designed to create and output a second comparison signal ($\Delta\varphi_o(n_p)$), which is the first temporal derivation of the first comparison signal ($\Delta\varphi_V(n_p)$), and the evaluation and switching means (15, 16) are designed for evaluation in respect of a zero-point shift to be corrected on the basis of the first and the second comparison signals (($\Delta\varphi_o(n_p)$, ($\Delta\varphi_V(n_p)$) .

**7.** Dimmer switch according to claim 1, **characterised in that** the zero-point correction unit (5) is essentially realised as a software component.

**8.** Dimmer switch according to claim 1, **characterised in that** the AC switch (3) and the zero-point correction unit (5) are designed as a common module.

**9.** Dimmer switch according to claim 1, **characterised in that** the zero-point correction unit (5) comprises a second regulation circuit for emulating a supply signal (U) fed in the supply line (4) having a shorter time constant than the first regulation circuit (7).

**10.** Dimmer switch according to claim 9, **characterised in that** the evaluation and switching means (15, 16) are designed for optional connection of the output (6) to the first comparison signal ($\Delta\varphi_V(n_p)$) or to a third comparison signal determined in the second regulation circuit.

**Revendications**

1. Circuit variateur pour commander l'alimentation d'une charge (2), comprenant :

   a) un interrupteur commandé à courant alternatif (3) qui est monté en série avec la charge (2) sur une ligne d'alimentation électrique (4),
   b) une unité de correction de point zéro (5) qui agit sur une commande de l'interrupteur à courant alternatif (3), **caractérisé en ce que**
   c) une unité de détection de point zéro (13) est prévue pour détecter des instants de passages effectifs par un point zéro ($N_i(n_p)$) d'un signal d'alimentation (U) passant par la ligne d'alimentation (4),
   d) l'unité de correction de point zéro (5) comprenant :

   d1) un premier circuit régulateur (7) pour reproduire un signal d'alimentation non perturbé (U),
   d2) une unité de comparaison (10) intégrée au premier circuit régulateur (7) pour comparer des passages par zéro virtuels ($N_v(n_p)$) du signal d'alimentation non perturbé reproduit (U) avec les passages par zéro effectifs détectés ($N_i(n_p)$) et pour produire en sortie un premier signal de comparaison ($\Delta\varphi_v(n_p)$), et
   d3) des moyens d'évaluation et de commutation (15, 16) connectés à l'unité de comparaison (10) qui évaluent le premier signal de comparaison ($\Delta\varphi_v(n_p)$) quant à un décalage de point zéro à corriger dans le signal d'alimentation (U) et qui commutent en tant que signal de correction sur une sortie (6) de l'unité de correction de point zéro (5) en fonction du résultat de l'évaluation.

2. Circuit variateur selon la revendication 1, **caractérisé en ce que** les moyens d'évaluation et de commutation (15, 16) sont conçus pour déterminer un décalage de point zéro à corriger à l'aide d'un écart temporel ($\Delta n_p$) entre deux valeurs extrêmes successives du premier signal de comparaison ($\Delta\varphi_v(n_p)$).

3. Circuit variateur selon la revendication 2, **caractérisé en ce qu'**est prévue, pour l'écart temporel ($\Delta n_p$), une valeur limite supérieure comprise dans une plage allant de 0,5 s à 4 s, et plus particulièrement de 2 s.

4. Circuit variateur selon la revendication 2, **caractérisé en ce que** les moyens d'évaluation et de commutation (15, 16) sont conçus pour déterminer un décalage de point zéro à corriger à l'aide d'une différence d'amplitude ($\Delta ex$) des valeurs extrêmes.

5. Circuit variateur selon la revendication 4, **caractérisé en ce qu'**est prévue, pour la différence d'amplitude ($\Delta ex$), une valeur limite inférieure comprise dans une plage allant de 10 $\mu$s à 50 $\mu$s, et plus particulièrement de 30 $\mu$s.

6. Circuit variateur selon la revendication 1, **caractérisé en ce que** l'unité de comparaison (10) est conçue pour générer et produire en sortie un deuxième signal de comparaison ($\Delta\varphi_0(n_p)$) qui est la première dérivée temporelle du premier signal de comparaison ($\Delta\varphi_v(n_p)$) et **en ce que** les moyens d'évaluation et de commutation (15, 16) sont conçus pour évaluer quant à un décalage de point zéro à corriger à l'aide du premier et du deuxième signal de comparaison ($\Delta\varphi_v(n_p)$), ($\Delta\varphi_0(n_p)$).

7. Circuit variateur selon la revendication 1, **caractérisé en ce que** l'unité de correction de point zéro (5) est réalisée, en particulier, sous la forme d'un composant logiciel.

8. Circuit variateur selon la revendication 1, **caractérisé en ce que** l'interrupteur à courant alternatif (3) et l'unité de correction de point zéro (5) sont réalisés sous la forme d'un sous-ensemble commun.

9. Circuit variateur selon la revendication 1, **caractérisé en ce que** l'unité de correction de point zéro (5) comprend un deuxième circuit régulateur pour reproduire un signal d'alimentation (U) passant par la ligne d'alimentation (4), lequel a une constante de temps plus courte que le premier circuit régulateur (7).

10. Circuit variateur selon la revendication 9, **caractérisé en ce que** les moyens d'évaluation et de commutation (15, 16) sont conçus pour relier la sortie (6), au choix, au premier signal de comparaison ($\Delta\varphi_v(n_p)$) ou à un troisième signal de comparaison déterminé dans le deuxième circuit régulateur.

# FIG 1

# FIG 2

FIG 3

$N_i(0)$　　　　$N_i(1)$　　　　$N_i(2)$　　　　$N_i(3)$

$\Delta\varphi_V(0) = 0$　　$\Delta\varphi_V(1)$　　　$\Delta\varphi_V(2)$　　　$\Delta\varphi_V(3)$
$\Delta\varphi_0(0) = 0$　　$\Delta\varphi_0(1)$　　　$\Delta\varphi_0(2)$　　　$\Delta\varphi_0(3)$

$T_{VCO}$　　　　$T_{VCO}$　　　　$T_{VCO}$

$T_{VCO}$　　$T_{VCO}$　　$T_{VCO}$

$N_V(0)$　　　　$N_V(1)$　　　　$N_V(2)$　　　　$N_V(3)$

0　　　　　1　　　　　2　　　　　3　　　$n_P$

FIG 4

$\Delta\varphi_V$

22　　21

0

$n_P$

$\Delta_{ex}$　$\Delta n_P$　$1/f_S$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1135007 B1
- DE 4406371 B4
- DE 69812133 T2
- DE 3614433 A1
- WO 03081364 A1
- US 6380692 B1